# EUROPEAN PATENT SPECIFICATION

(11) **EP 4 265 992 B1**
(45) Date of publication and mention of the grant of the patent: **22.10.2025**
(21) Application number: 23196389.3
(22) Date of filing: 27.11.2019
(51) Int. Cl.: B05B 5/03, B05B 5/043, B05B 7/06, B05B 7/04, B05B 7/08, F26B 3/12, B05B 15/18

(54) **ELECTROSTATIC SPRAY DRYING NOZZLE ASSEMBLY**
DÜSENANORDNUNG FÜR ELEKTROSTATISCHE SPRÜHTROCKNUNG
ENSEMBLE BUSE DE SÉCHAGE PAR PULVÉRISATION ÉLECTROSTATIQUE

(30) Priority: 30.11.2018 US 201862773875 P
(43) Date of publication of application: 25.10.2023
(62) Divisional of application: 19827965.5
(73) Proprietor: Spraying Systems Co., Wheaton, IL 60187-7901 (US)
(72) Inventor: ACKERMAN, Thomas, Francestown, 03043 (US); WEE SIT, Lyndon, Hudson, 03051 (US); WEINSTEIN, Donald, Nashua, 03063 (US); HUFFMAN, Dave, Merrimack, 03054 (US)
(74) Representative: Barker Brettell LLP

(56) References cited:
- US-A- 3 790 086
- US-A1- 2017 120 267

## Description

### CROSS-REFERENCE TO RELATED APPLICATION

This patent application claims the benefit of U.S. Patent Application No. 62/773,875 filed November 30, 2018.

### FIELD OF THE INVENTION

The present invention relates generally to liquid spray nozzle assemblies, and more particularly, to electrostatic spray nozzle assemblies particularly adapted for spray drying liquids by electrostatically charging fluids to facilitate fine liquid particle breakdown and distribution.

### BACKGROUND OF THE INVENTION

In the spray drying industry, electrostatic spray nozzle assemblies are now being used to improve drying efficiency and product quality. While it is desirable to utilize internal components made from non-metallic material, the solvents used in many spray drying applications attack and degrade such materials. Hence, it is necessary that the spray dryer apparatus be designed to ensure that solvents in their liquid state do not come in contact with such degradable plastic components. Typically electrostatic spray dryers have utilized external mix spray nozzle assemblies in which the liquid feed and atomizing gas interact outside the nozzle.

External mix spray nozzles, however, operate at very low liquid flow rates, such as less than 10 kg/hr of feed stock. Such low flow nozzles produce a very fine droplet with at an easily controllable low pressure. To increase the flow rate, however, it is necessary to increase the diameter of the liquid discharge orifice of the nozzle. As the liquid discharge orifice is increased in diameter to reach the higher flow rates, however, the droplet sizes of the spray will also increase. If the droplet size is too large, it will not dry adequately in the dryer chamber even when electrostatically charged. Liquid droplets that are not adequately dried further can coat internal components of the sprayer, impeding optimum operation and requiring cleaning and/or replacement. Larger spray nozzle discharge orifices further result in discharging sprays with greater velocities and momentum. In spray drying applications, this requires longer length and more expensive drying chambers to accommodate such discharging sprays. In order to increase spraying capacity while maintaining optimum liquid atomization at low flow rates, it has been necessary to use a multiplicity of electrostatic sprayers, with multiple nozzle bodies, feed lines, compressed gas lines, pumps, and high voltage cables, which is costly and can be cumbersome to install and use.

Internal mix spray nozzle assemblies are known that have the benefit of multistage liquid breakup in atomization which allows the spray nozzle to produce very fine liquid particle discharges. Internal mix spray nozzles, however, operate at higher liquid pressures, which can preclude the use of low pressure operating peristaltic pumps particularly preferred for spray drying in the pharma and flavor industries. Internal mix spray nozzles further utilize considerably smaller amounts of compressed atomizing gases, which can be advantageous when atomizing with non-air gases, such as hydrogen which are desirable in various spray drying applications. US2017/120267 describes an electrostatic spray dryer for drying liquid into powder including an elongated body defining a drying chamber, a spray nozzle assembly at one end of the drying chamber and a filter element housing and powder collection chamber at an opposite end.

### OBJECTS AND SUMMARY OF THE INVENTION

It is an object of the present invention to provide an electrostatic sprayer having an electrostatic spray nozzle assembly that can generate a controllable fine liquid droplet spray with relatively high flow rates particularly advantageous in spray drying applications.

Another object is to provide an external mix electrostatic spray nozzle assembly as characterized above that can be operated at relatively high flow rates in spray dryers having shorter and more compact drying chambers.

A further object is to provide an electrostatic spray nozzle assembly of the forgoing type in which internal degradable plastic or other non-metallic components of the spray nozzle assembly are isolated from sprayed liquid.

Yet another object is to provide an electrostatic sprayer having a spray nozzle assembly of the above kind that can be operated at relatively low pressures, and hence can economically utilize low pressure peristaltic pumps.

Still a further object is to provide an electrostatic spray nozzle assembly of the above kind that has an internal mix spray nozzle for more efficiently producing a controllable fine liquid droplets at lower atomizing gas flow rates particularly advantageous in spray drying.

Yet another object is to provide an electrostatic spray nozzle assembly for use in spray drying that is relatively simple in construction and lends itself to economical manufacture.

Other objects and advantages of the invention will become apparent upon reading the following detailed description and upon reference to the drawings, in which:

### BRIEF DESCRIPTION OF THE DRAWINGS

Figure 1 is a longitudinal section of an illustrative electrostatic sprayer having an external mix spray nozzle assembly not in accordance with the claimed invention;
Fig. 2 is an enlarged fragmentary section of the external mix spray nozzle assembly of the electrostatic sprayer shown in Fig. 1;
Fig. 3 is an enlarged fragmentary section of one of the spray tip assemblies of the spray nozzle assembly shown in Fig. 2;
Fig. 4 is an exploded view of the spray nozzle assembly shown in Figs. 1 and 2;
Fig. 5 is a longitudinal section depicting the assembly of the spray nozzle assembly in the electrostatic sprayer shown in Fig. 1;
Fig. 6 is a longitudinal section of an embodiment of an electrostatic sprayer in accordance with the claimed invention, in this case having an internal mix spray nozzle assembly;
Fig. 7 is an enlarged fragmentary section of the spray nozzle assembly of the sprayer shown in Fig. 6;
Fig. 8 is a longitudinal section similar to Fig. 6, but showing components of the sprayer being assembled;
Fig. 9 is an exploded view of the internal mix spray nozzle assembly of the electrostatic sprayer shown in Fig. 6; and
Fig. 10 is an enlarged fragmentary perspective, partially in section, showing the discharge end of the electrostatic sprayer shown in Fig. 6.

While the invention is susceptible of various modifications and alternative constructions, certain illustrative embodiments thereof have been shown in the drawings and will be described below in detail. It should be understood, however, that there is no intention to limit the invention to the specific forms disclosed, but on the contrary, the intention is to cover all modifications and alternative constructions falling within the scope of the claims.

### DETAILED DESCRIPTION OF PREFERRED EMBODIMENTS

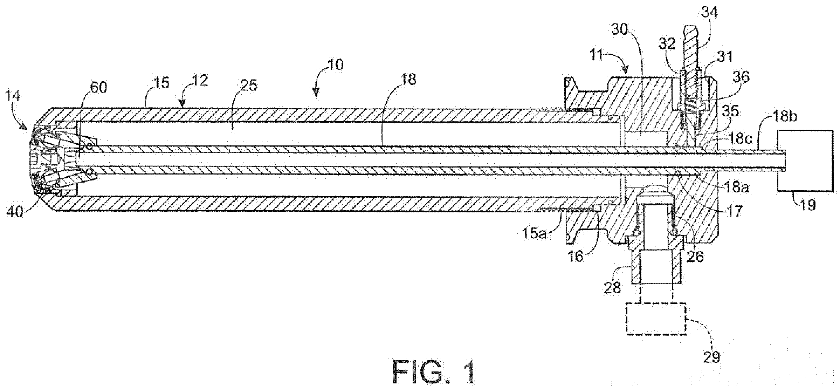

Referring now more particularly to Fig. 1 of the drawings, there is shown an illustrative electrostatic sprayer 10 not in accordance with the invention. The illustrated electrostatic sprayer 10 includes a fluid and high voltage input head 11, an elongated nozzle barrel or body 12 extending downstream from the input head 11, and a discharge spray nozzle assembly 14 at a downstream end of the elongated nozzle body 12. It will be understood that the electrostatic sprayer 10 may be used in spray drying systems, such as the spray drying systems disclosed in U.S. application no. 15/342,710 filed November 3, 2016 assigned to the same assignee as the present application. The nozzle body 12 may be relatively long in length in relation to its diameter for enabling mounting of the sprayer 10 in a wall of a processing vessel or the like with the discharge spray nozzle assembly 14 within the vessel and the input head 11 remotely located outside the vessel. The input head 11 and nozzle body 12 preferably are made of a hard plastic or other electrically non-conductive material, such as thermoplastic polyetherimide (PEI) sold under the tradename Ultem1000, which can be machined into final form. In practice, the elongated nozzle body 12 may have a length of 10 times or more the diameter of the nozzle body 12, up to 30.48cm (12 inches) or more.

The input head 11 is cylindrical in form and the elongated body 12 is a cylindrical body member 15 having an upstream end threadably engaged within a threaded bore of the input head 11 with a sealing O-ring 16 interposed between the cylindrical body member 15 and input head 11. A liquid feed tube 18 made of stainless steel or other electrically conductive material extends axially through the outer cylindrical body member 15 with an upstream end 18a supported within and extending outwardly thereof for coupling to pressurized liquid supply 19. The liquid feed tube 18 in this instance has a reduced diameter upstream end section 18b that defines a locating shoulder 18c mountable within a counterbore of the input head 11. A sealing O-ring 17 is interposed between the liquid feed tube 18 and the input head 11.

The liquid feed tube 18 extends axially through the cylindrical body member 15 for defining an annular atomizing gas passage 25 between a liquid feed tube 18 and the outer cylindrical body member 15. The input head 11 is formed with a radial pressurized gas inlet passage 26 that receives with a gas inlet filling 28 coupled to a suitable pressurized gas supply 29. The gas inlet passage 26 communicates with an annular gas chamber 30 surrounding the liquid feed tube 18 within the input head 11, which in turn communicates with the annular atomizing gas passage 25 through the cylindrical body member 15.

For electrically charging liquid directed into and through the liquid feed tube 18, the input head 11 further has a radial passage 31, in this case upstream of the gas inlet passage 26, that receives a fitting 32 secured to a high voltage cable 34 connected to a high voltage source. The high voltage cable 34 in this instance has a terminal abutment segment 35 biased by a spring 36 into reliable electrically conducting relation with the liquid feed tube 18. With the liquid feed tube 18 electrically charged by the high voltage cable 34 it can be seen that feed liquid through the feed tube 18 is charged along its entire length of travel to the spray nozzle assembly 14. At the same time, pressurized gas is communicated through the annular gas passage 25 between the liquid feed tube 18 and outer cylindrical body member 15.

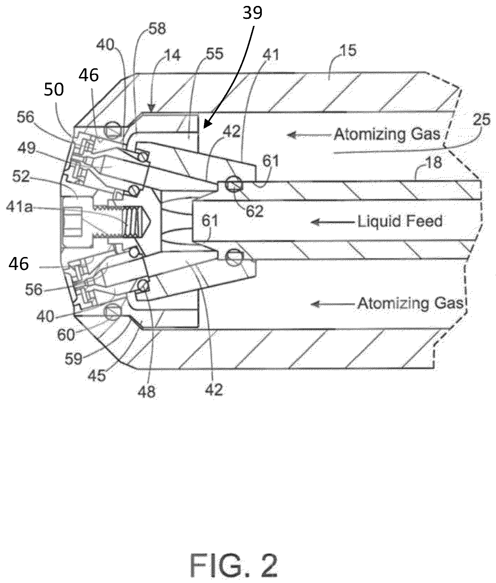

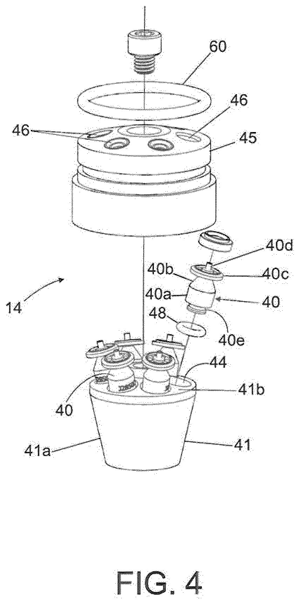

In this electrostatic sprayer, the spray nozzle assembly 14 is an external mix spray nozzle assembly operable for producing a fine liquid particle spray, particularly suitable for spray drying applications, at relatively high liquid flow rates and low pressures for optimum and economical spray drying operation. To this end, the spray nozzle assembly 14 has a cluster head design comprising a plurality of individual spray tips 40 coupled to common pressurized liquid and gas supplies, in this case, from the liquid feed tube 18 and the annular pressurized gas passage 25, respectively. The illustrated cluster head spray nozzle assembly 14, as best depicted in Figs. 2-4, has a cluster head body 39 that comprises a nozzle liquid manifold 41 and a nozzle cap 45. The nozzle liquid manifold 41 is formed with a plurality of outwardly angled liquid passages 42 each communicating between the common liquid feed tube 18 and a plurality of respective downstream spray tip receiving openings 44 within which a respective spray tip 40 is mounted and retained (Figs. 2 and 4). The nozzle cap 45 mounted on a downstream end of the nozzle liquid manifold 41 has a plurality of circumferentially spaced cylindrical openings 46 aligned with the spray tips 40. The nozzle liquid manifold 41 in this instance has a frustoconical upstream end 41a expanding outwardly in a downstream direction and an outwardly curved downstream end 41b through which the spray tip receiving openings 44 extend in a downstream direction at a small angle, such as between about 12-15 degrees, outwardly with respect to a central axis of the nozzle liquid manifold 41 and cylindrical body member 15.

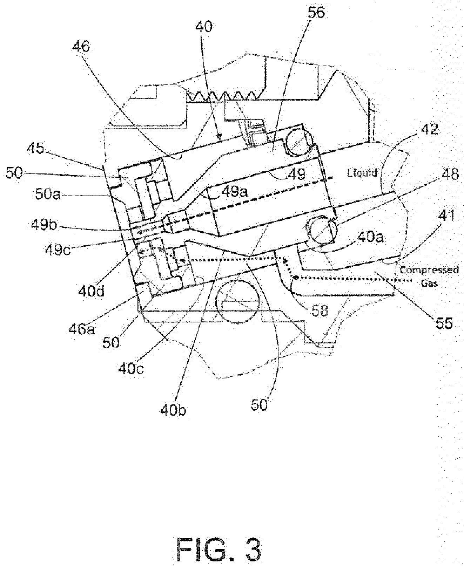

The spray tips 40 each are made of an electrically conductive metal and in this case have an upstream cylindrical hub 40a, a inwardly tapered forwardly extending section 40b having an outwardly extending radial flange 40c adjacent a downstream end thereof, and a forwardly extending relatively small diameter nose 40d. (Fig. 4) The spray tips 40 each have an upstream smaller diameter annular hub 40e positioned in the spray tip receiving opening 44 of the nozzle liquid manifold 41 with a sealing O-ring 48 interposed therebetween (Fig. 2). The spray tips 40 each have a relatively large diameter inlet passage section 49 that communicates with an inwardly converging conical passage section 49a, which in turn communicates with a relatively small diameter liquid passage 49b extending through the nose 40d that defines a relatively small discharge orifice 49c, such as on the order of 10mm (0.040 inches). (Fig. 3) The spray tip inlet passage sections 49 of each of the spray tips communicate with respective one of the outwardly converging liquid flow passages 42 in the nozzle liquid manifold 41.

The radial flange 40c of each spray tip 40 is each mounted within a respective one of the cylindrical openings 46 of the nozzle cap 45 with an annular plastic air cap 50 disposed about the spray tip radial flange 40c in interposed sealing engagement between the radial flange 40c and nozzle cap opening 46. The plastic air cap 50 in this case has an L-shape cross section periphery disposed about the front and outer peripheries of each spray tip radial flange 40c with a forwardly extending lip 50a mounted in overlying relation to an annular lip of the nozzle cap opening 46. (Fig. 3) The nozzle cap 45 is secured to the nozzle liquid manifold 41 by a nylon or like non-metallic retaining screw 52 extending centrally through the nozzle cap 45 into threaded engagement with an axial opening 41a of the nozzle liquid manifold 41 for securing the spray tips 40 and plastic air caps 50 in assembled relation.

For atomizing liquid discharging from the spray tips 40, the nozzle liquid manifold 41 and nozzle cap 45 define an annular atomizing gas passageway 55 (Fig. 2) that communicates between the annular gas passageway 25 between the metallic liquid feed tube 18 and outer nozzle body member 15 and an annular gas passage 56 about each spray tip 40 via a respective right angle inlet passage 58. Pressurized atomizing gas thereby can be simultaneously directed about the plurality of spray tips 40, through circumferential air passage openings 40d in the respective spray tip radial flanges 40c, and axially outwardly into interacting atomizing engagement with liquid discharging from the plurality of spray tip discharge orifices 49c. (Fig. 3)

In a further feature of this electrostatic sprayer, liquid directed through the cluster head spray nozzle assembly 14 is subjected to multistage electrostatic charging for enhanced liquid atomization upon discharge from the spray nozzle assembly. To this end, a downstream end of the metallic electrically charged liquid feed tube 18 has a sharp chamfered end 60, preferably charged to about 30 kv, that first focuses an electrostatic field into the feed stock as it is discharged from the feed tube 18 and prior to entry into the spray tips 40, and secondly, the gap between the sharp chamfered end 60 of the charged liquid feed tube 18 and the spray tips 40 creates a capacitance within the gap that has unexpectedly been found to increase the electrostatic charge on the liquid as it is directed to and through the spray tips 40.

In operation, the cluster head spray nozzle assembly 14 has proven to produce quality fine liquid particle spraying optimum for spray drying applications at relatively high liquid flow rates up to 125 kg/hr. Yet the spray tips 40 each have relatively small discharge orifices 49c for enabling low pressure, controllable operation, using peristaltic pumps favored in spray drying applications. The cluster head spray nozzle assembly 14, furthermore, can deliver such high flow rate spraying in much shorter length, such as 0.91m (three feet) to 1.52m (five feet), and hence, in more economical spray drying chambers then hereto for possible when utilizing spray nozzle with larger discharge orifices and liquid pressures to increase flow rate. The multiple electrostatically charged spray patterns discharging from the cluster head spray nozzle assembly in the same chamber further has been found to cause particles to reattach to one another after they have dried, thereby reducing the amount of particles that are too fine to control which can hinder coating efficiency. Finally, it can be seen that all of the internal components of the electrostatic sprayer that are subject to contact by the liquid being sprayed are made of Teflon or stainless steel which are resistant to most liquids to be sprayed. The outer cylindrical body member 15, which preferably is made of a harder polyetherimide material that can be subject to degradation from certain solvents used in spray drying, is maintained out of contact from the liquid feed stock.

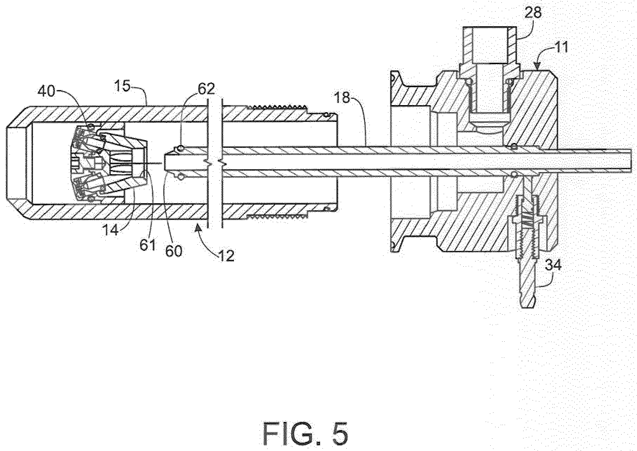

To facilitate economical manufacture of the electrostatic sprayer 10, it will be appreciated that the cluster head spray nozzle assembly 14 may be preassembled for efficient mounting in the nozzle body 12. The spray nozzle assembly 14 in preassembled condition in this instance can be assembled in cylindrical body member 15 by positioning into the cylindrical body member 15 from an upstream end, as depicted in Fig. 5. The downstream end of the illustrated cylindrical body member 15 is formed with an annular smaller diameter lip 59 for supporting the other periphery of the nozzle cap 45 with a sealing O-ring 63 between the nozzle cap 45 and cylindrical body member 15. The liquid feed tube 18 can thereupon be inserted into a central opening 61 of the nozzle liquid manifold 41 with an interposed annular O-ring 62 therebetween. While the illustrated spray nozzle assembly 14 has six spray tips, depending upon the size of the nozzle liquid manifold, other numbers of spray tips, preferably between about three and eight, could be used.

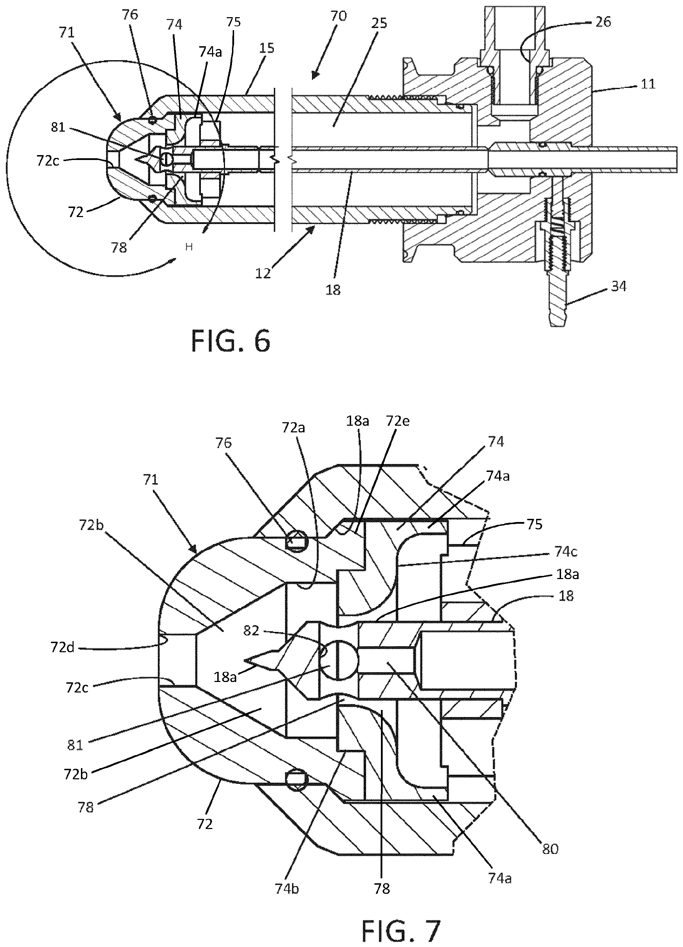

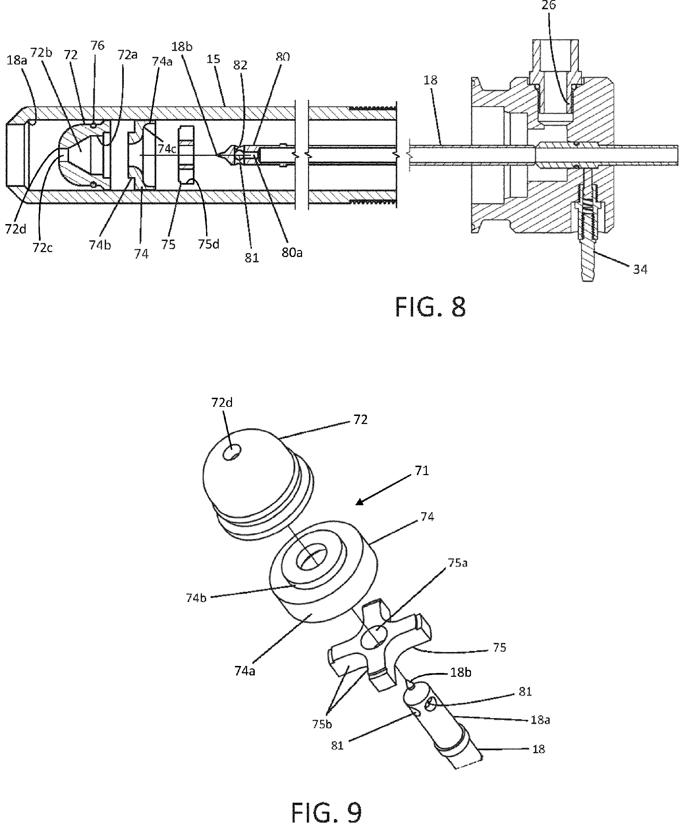

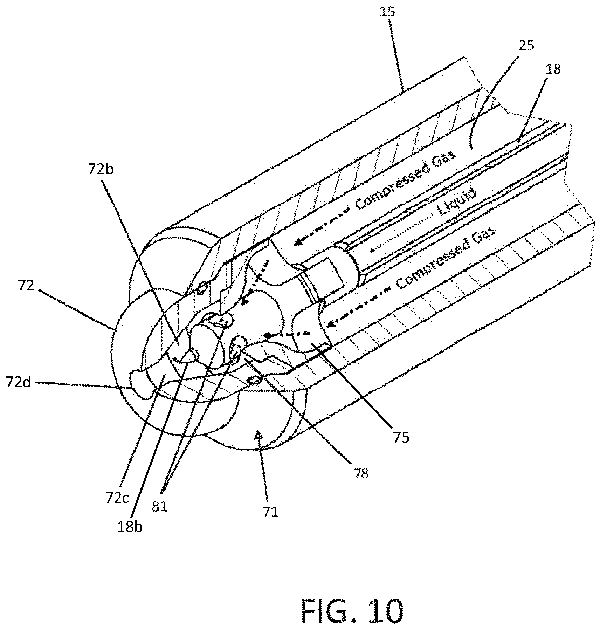

Referring now more particularly to Figs 6-10, there is shown an electrostatic sprayer 70 having an embodiment of an electrostatic spray nozzle assembly 71 in accordance with invention, wherein items similar to those described above have been given similar reference numerals. The electrostatic sprayer 70 includes an input head 11 with liquid feed tube 18, a pressurized gas inlet 26, and high voltage cable connection 34 similar to that described above. The sprayer 70 further includes an elongated nozzle body 12 fixed to the input head 11 with the electrically chargeable liquid feed tube 18 centrally disposed therein.

In carrying out this embodiment of the invention, the electrostatic spray nozzle assembly 71 is an internal mix spray nozzle assembly operable for directing a fine liquid particle spray for optimum usage in spray drying. The illustrated spray nozzle assembly 71 basically comprises a dome configured spray tip 72, an inner air guide 74 mounted directly upstream of the spray tip 72, and a center locator 75 for supporting the downstream end of the liquid feed tube 18 centrally within the air guide 74 and spray tip 72.

The illustrated dome configured spray tip 72 has an upstream cylindrical passage section 72a that communicates with an inwardly converging mixing chamber 72b, which in turn communicates through a smaller diameter cylindrical passage section 72c that defines a spray discharge orifice 72d. The spray tip 72 has an outwardly extending radial flange 72c supported against a reduced diameter annular retention lip 18a of the outer cylindrical nozzle body member 18. A sealing O-ring 76 is interposed between the dome of the spray tip 72 and an inner annular side of retaining lip 18a of the cylindrical body member 15.

The air guide 74 has an outer cylindrical wall section 74a mounted within the cylindrical body member 15 and a forwardly extending annular hub 74b concentrically mounted within an annular counterbore of the spray tip 72. The center locator 75 has a central opening 75a in which a liquid feed tube 15 extends and is supported in a plurality of radial support legs 75b. The radial legs 75b in this case are supported adjacent their downstream ends within the cylindrical wall 74a of the air guide 74. The air guide 74 has an inwardly curved internal wall 74c for channeling and converging pressurized atomizing gas from the annular gas passage 25 through a small annular gas passage 78 surrounding the liquid feed tube 18.

In further carrying out this embodiment, the liquid feed tube 18 includes an end segment section 18a axially coupled thereto formed with a reduced diameter liquid passage section 80 that communicates with a plurality of cross slots 81 for directing pressurized liquid flow streams radially outwardly of the liquid feed tube 18 for interaction and atomization by pressurized atomizing gas directed through the narrow annular air passage 78 directly across the cross slots 81. In this instance there are four circumferentially spaced cross slots 81 which define an impingement surface 82 at the end of the feed tube segment 18a against which liquid directed through the liquid feed tube 18 impinges and is forcefully directed out radially outwardly for interaction with the pressurized atomizing gas. It will be understood that the extension segment 18a of the liquid feed tube 18 also is made of an electrically conductive metallic material and is fixed in electrically contacting relation to the liquid feed tube 18.

In keeping with a further important feature of this embodiment, the liquid feed tube end segment 18a has a sharp pointed end 18b disposed within the mixing chamber 72b of the spray tip 72 for focusing an electrostatic field therefrom in a manner that enhances electrostatic charging and atomization of the liquid particles within the spray tip mixing chamber 72b prior to discharge from the spray nozzle assembly 71. The terminal pointed end 18b of the feed tube 18 is located centrally within the spray tip mixing chamber 72b for focusing the electrostatic field into the atomized liquid particles as they converge and exit the discharge passage 72d.

In operation, the electrostatic sprayer 70 is operable for efficiently producing quality fine liquid particle atomized spray at high liquid feed stock rates up to 125 kg/hr with less pressurized atomizing gas requirements, which is particularly advantageous when using non-air atomizing gas, such as hydrogen gas commonly used in spray drying. Nitrogen is used to protect against a dust explosion, which is a higher risk with electrostatic spraying, also has the ability to absorb large amounts of moisture. Like in the previous illustrative example, liquid is charged as it is directed through the metal liquid supply tube 18 simultaneous with the direction of pressurized gas through the annular chamber 25 surrounding the liquid supply tube 18. In this instance, the liquid breaks up in multiple stages, first by impinging upon the impingement surface 82 at the downstream end of the liquid supply tube segment 18a and transverse direction through the radial discharge passages 81 for interaction with pressurized atomizing gas directed across radial liquid discharge passages 81. The atomized liquid is then directed by the atomizing gas into the downstream mixing chamber 72b of the spray tip 72 where fine liquid particles are further charged by the focused electrostatic fields promulgated by the sharp pointed end 18b liquid feed tube segment 18a for further enhanced atomization prior to discharge from the exit orifice 72d as a very fine liquid particle spray for efficient spray drying.

## Claims

1. An electrostatic sprayer (10) comprising:
A high voltage input head (11);
an elongated nozzle body (12) supported in downstream relation to said input head (11);
a liquid feed tube (18) made of electrically conductive material disposed within said elongated nozzle body (12) and extending in downstream relation to said input head (11); said liquid feed tube (18) being connectable to a pressurized liquid supply (19) for directing liquid through said feed tube (18);
said elongated nozzle body (12) and liquid feed tube (18) defining an annular atomizing gas passage (25) within said nozzle body (12);
said input head (11) having a high voltage cable input section (34) in electrical contact with said liquid feed tube (18) and for connection to a high voltage electrical source for electrically charging said liquid feed tube (18) and liquid directed through said feed tube (18);
said input head (11) having a pressurized gas inlet (26) in communication with said annular atomizing gas passage (25) and for connection to a pressurized atomizing gas supply (29) for directing pressurized atomizing gas through said annular atomizing gas passage (25); **characterized by**
an internal mix spray nozzle assembly (14) mounted at a downstream end of said elongated nozzle body (12);
said spray nozzle assembly (71) including a spray tip (72) mounted at a downstream end of said elongated nozzle body (12) that defines a mixing chamber (72b) downstream of said liquid feed tube (18), the mixing chamber (72b) converging inwardly in downstream direction and communicating with a discharge orifice (72d) of the spray tip (72);
said liquid feed tube (18) including an end section having a reduced diameter liquid passage (80) for accelerating electrically charged liquid directed through said liquid feed tube (18);
said end section having a plurality of cross slots (81) for directing electrically charged liquid flow streams radially outward of said liquid feed tube (18) into said mixing chamber (72b); and
an air guide (74) mounted upstream of said spray tip (72) in surrounding relation to said liquid feed tube (18) for defining an inwardly converging gas passage in communication with said annular atomizing gas passage (25) for channeling and converging pressurized atomizing gas from said annular atomizing gas passage (25) through an annular gas passage (78) surrounding the liquid feed tube end section defined between said air guide (74) and liquid feed tube end section directly across said cross slots (81) for interaction and atomization of the electrically charged liquid discharging from said cross slots (81) and for directing the atomized liquid into said mixing chamber for subsequent discharge from said spray tip discharge orifice (72d).

2. The electrostatic sprayer (10) of claim 1 including a center locater for supporting the downstream end of said liquid feed tube centrally within said air guide and spray tip, said center locator having a central opening through which said liquid feed tube extends and a plurality of radially support legs that support the liquid feed tube centrally within said air guide (74) and spray tip (40).

3. The electrostatic sprayer (10) of claim 1 in which said spray tip discharge orifice is aligned with said liquid feed tube (18).

4. The electrostatic sprayer (10) of claim 1 in which said spray tip (72) has an outer radial flange (72e) supported against a reduced diameter annular lip (18a) of said elongated nozzle body (12) adjacent a downstream end thereof.

5. The electrostatic sprayer of claim 1 in which said cross slots (81) define an impingement surface (82) against which electrically charged liquid directed through said liquid feed tube (18) impinges and is directed radially outwardly through said cross slots (81) for interaction by pressurized atomizing gas channeled by the air guide (74).

6. The electrostatic sprayer (10) of claim 1 in which said liquid feed tube has a pointed terminal end disposed within said spray tip mixing chamber for directing an electrostatic field into said mixing chamber for further charging atomized liquid particles within said spray tip mixing chamber prior to discharge from the spray tip discharge orifice.

7. The electrostatic sprayer of claim 6 in which said spray tip discharge orifice is axially aligned with said pointed terminal end of the liquid feed tube.

8. The electrostatic sprayer (10) of claim 1 in which said mixing chamber (72) includes a frustoconical downstream section that communicates with said discharge orifice (49).

## Patentansprüche

1. Elektrostatische Sprühvorrichtung (10), umfassend:
einen Hochspannungseingangskopf (11);
einen länglichen Düsenkörper (12), der in Stromabwärts-Beziehung zu dem Eingangskopf (11) gestützt ist;
ein Flüssigkeitszufuhrrohr (18), das aus elektrisch leitendem Material hergestellt ist und innerhalb des länglichen Düsenkörpers (12) angeordnet ist und sich in Stromabwärts-Beziehung zu dem Eingangskopf (11) erstreckt; wobei das Flüssigkeitszufuhrrohr (18) mit einer unter Druck stehenden Flüssigkeitsversorgung (19) zum Leiten von Flüssigkeit durch das Zufuhrrohr (18) verbunden werden kann;
wobei der längliche Düsenkörper (12) und das Flüssigkeitszufuhrrohr (18) einen ringförmigen Zerstäubungsgaskanal (25) innerhalb des Düsenkörpers (12) definieren;
wobei der Eingangskopf (11) einen Hochspannungskabel-Eingangsabschnitt (34) in elektrischem Kontakt mit dem Flüssigkeitszufuhrrohr (18) und zur Verbindung mit einer elektrischen Hochspannungsquelle zum elektrischen Laden des Flüssigkeitszufuhrrohrs (18) und von durch das Zufuhrrohr (18) geleiteter Flüssigkeit aufweist;
wobei der Eingangskopf (11) einen unter Druck stehenden Gaseinlass (26) in Kommunikation mit dem ringförmigen Zerstäubungsgaskanal (25) und zur Verbindung mit einer unter Druck stehenden Zerstäubungsgasversorgung (29) zum Leiten von unter Druck stehendem Zerstäubungsgas durch den ringförmigen Zerstäubungsgaskanal (25) aufweist; **gekennzeichnet durch**
eine interne Mischsprühdüsenanordnung (14), die an einem stromabwärtigen Ende des länglichen Düsenkörpers (12) montiert ist;
wobei die Sprühdüsenanordnung (71) eine an einem stromabwärtigen Ende des länglichen Düsenkörpers (12) montierte Sprühspitze (72) beinhaltet, die eine Mischkammer (72b) stromabwärts des Flüssigkeitszufuhrrohrs (18) definiert, wobei die Mischkammer (72b) in Stromabwärts-Richtung nach innen konvergiert und mit einer Austrittsöffnung (72d) der Sprühspitze (72) kommuniziert;
wobei das Flüssigkeitszufuhrrohr (18) einen Endabschnitt mit einem Flüssigkeitskanal (80) mit reduziertem Durchmesser zum Beschleunigen elektrisch geladener Flüssigkeit, die durch das Flüssigkeitszufuhrrohr (18) geleitet wird, beinhaltet;
wobei der Endabschnitt eine Vielzahl von Querschlitzen (81) zum Leiten elektrisch geladener Flüssigkeitsdurchflussströme radial nach außen von dem Flüssigkeitszufuhrrohr (18) in die Mischkammer (72b) aufweist; und
eine Luftführung (74), die stromaufwärts der Sprühspitze (72) in Umgebungsbeziehung zu dem Flüssigkeitszufuhrrohr (18) montiert ist, um einen nach innen konvergierenden Gaskanal in Kommunikation mit dem ringförmigen Zerstäubungsgaskanal (25) zu definieren, zum Führen und Konvergieren von unter Druck stehendem Zerstäubungsgas aus dem ringförmigen Zerstäubungsgaskanal (25) durch einen ringförmigen Gaskanal (78), der den Flüssigkeitszufuhrrohrendabschnitt umgibt, definiert zwischen der Luftführung (74) und dem Flüssigkeitszufuhrrohrendabschnitt direkt über die Querschlitze (81) zur Wechselwirkung und Zerstäubung der elektrisch geladenen Flüssigkeit, die aus den Querschlitzen (81) austritt, und zum Leiten der zerstäubten Flüssigkeit in die Mischkammer zum anschließenden Austritt aus der Sprühspitzenaustrittsöffnung (72d).

2. Elektrostatische Sprühvorrichtung (10) nach Anspruch 1, beinhaltend eine Mittelpositioniervorrichtung zum Stützen des stromabwärtigen Endes des Flüssigkeitszufuhrrohrs zentral innerhalb der Luftführung und der Sprühspitze, wobei die Mittelpositioniervorrichtung eine zentrale Öffnung, durch die sich das Flüssigkeitszufuhrrohr erstreckt, und eine Vielzahl von radialen Stützbeinen, die das Flüssigkeitszufuhrrohr zentral innerhalb der Luftführung (74) und der Sprühspitze (40) stützen, aufweist.

3. Elektrostatische Sprühvorrichtung (10) nach Anspruch 1, bei der die Sprühspitzen-Austrittsöffnung an dem Flüssigkeitszufuhrrohr (18) ausgerichtet ist.

4. Elektrostatische Sprühvorrichtung (10) nach Anspruch 1, bei der die Sprühspitze (72) einen äußeren radialen Flansch (72e) aufweist, der gegen eine ringförmige Lippe (18a) mit reduziertem Durchmesser des länglichen Düsenkörpers (12) angrenzend an ein stromabwärtiges Ende davon abgestützt ist.

5. Elektrostatische Sprühvorrichtung nach Anspruch 1, bei der die Querschlitze (81) eine Auftrefffläche (82) definieren, gegen welche elektrisch geladene Flüssigkeit, die durch das Flüssigkeitszufuhrrohr (18) geleitet wird, auftrifft und radial nach außen durch die Querschlitze (81) zur Wechselwirkung durch unter Druck stehendem Zerstäubungsgas, das durch die Luftführung (74) geführt wird, geleitet wird.

6. Elektrostatische Sprühvorrichtung (10) nach Anspruch 1, bei der das Flüssigkeitszufuhrrohr ein spitzes Anschlussende aufweist, das innerhalb der Sprühspitzen-Mischkammer zum Leiten eines elektrostatischen Felds in die Mischkammer zum weiteren Laden von zerstäubten Flüssigkeitspartikeln innerhalb der Sprühspitzen-Mischkammer vor Austritt aus der Sprühspitzen-Austrittsöffnung angeordnet ist.

7. Elektrostatische Sprühvorrichtung nach Anspruch 6, bei der die Sprühspitzen-Austrittsöffnung axial an dem spitzen Anschlussende des Flüssigkeitszufuhrrohrs ausgerichtet ist.

8. Elektrostatische Sprühvorrichtung (10) nach Anspruch 1, bei der die Mischkammer (72) einen kegelstumpfförmigen stromabwärtigen Abschnitt beinhaltet, der mit der Austrittsöffnung (49) kommuniziert.

## Revendications

1. Pulvérisateur électrostatique (10) comprenant :
une tête d'entrée haute tension (11) ;
un corps de buse allongé (12) supporté en relation aval avec ladite tête d'entrée (11) ;
un tube d'alimentation en liquide (18) fabriqué en matériau électriquement conducteur disposé à l'intérieur dudit corps de buse allongé (12) et s'étendant en relation aval avec ladite tête d'entrée (11) ; ledit tube d'alimentation en liquide (18) pouvant être connecté à une alimentation en liquide sous pression (19) pour diriger le liquide à travers ledit tube d'alimentation (18) ;
ledit corps de buse allongé (12) et ledit tube d'alimentation en liquide (18) définissant un passage annulaire de gaz d'atomisation (25) à l'intérieur dudit corps de buse (12) ;
ladite tête d'entrée (11) comportant une section d'entrée de câble haute tension (34) en contact électrique avec ledit tube d'alimentation en liquide (18) et permettant la connexion à une source électrique haute tension pour charger électriquement ledit tube d'alimentation en liquide (18) et le liquide dirigé à travers ledit tube d'alimentation (18) ;
ladite tête d'entrée (11) ayant une admission de gaz sous pression (26) en communication avec ledit passage annulaire de gaz d'atomisation (25) et permettant la connexion à une alimentation de gaz d'atomisation sous pression (29) pour diriger le gaz d'atomisation sous pression à travers ledit passage annulaire de gaz d'atomisation (25) ; **caractérisé par**
un ensemble buse de pulvérisation de mélange interne (14) monté à une extrémité aval dudit corps de buse allongé (12) ;
ledit ensemble buse de pulvérisation (71) comprenant une pointe de pulvérisation (72) montée à une extrémité aval dudit corps de buse allongé (12) qui définit une chambre de mélange (72b) en aval dudit tube d'alimentation en liquide (18), la chambre de mélange (72b) convergeant vers l'intérieur dans la direction aval et communiquant avec un orifice de décharge (72d) de la pointe de pulvérisation (72) ;
ledit tube d'alimentation en liquide (18) comprenant une section d'extrémité ayant un passage de liquide de diamètre réduit (80) pour accélérer le liquide chargé électriquement dirigé à travers ledit tube d'alimentation en liquide (18) ;
ladite section d'extrémité comportant une pluralité de fentes transversales (81) pour diriger les flux d'écoulement de liquide chargé électriquement radialement vers l'extérieur dudit tube d'alimentation en liquide (18) dans ladite chambre de mélange (72b) ; et
un guide d'air (74) monté en amont de ladite pointe de pulvérisation (72) en relation enveloppante avec ledit tube d'alimentation en liquide (18) pour définir un passage de gaz convergeant vers l'intérieur en communication avec ledit passage annulaire de gaz d'atomisation (25) pour canaliser et faire converger le gaz d'atomisation sous pression en provenance dudit passage annulaire de gaz d'atomisation (25) à travers un passage annulaire de gaz (78) enveloppant la section d'extrémité de tube d'alimentation en liquide définie entre ledit guide d'air (74) et ladite section d'extrémité de tube d'alimentation en liquide directement à travers lesdites fentes transversales (81) permettant l'interaction et l'atomisation du liquide chargé électriquement se déchargeant desdites fentes transversales (81) et pour diriger le liquide atomisé dans ladite chambre de mélange en vue de sa décharge ultérieure par ledit orifice de décharge (72d) de pointe de pulvérisation.

2. Pulvérisateur électrostatique (10) selon la revendication 1, comprenant un dispositif de positionnement central pour supporter l'extrémité aval dudit tube d'alimentation en liquide de manière centrale à l'intérieur dudit guide d'air et de ladite pointe de pulvérisation, ledit dispositif de positionnement central ayant une ouverture centrale à travers laquelle ledit tube d'alimentation en liquide s'étend et une pluralité de pattes de support radial qui supportent le tube d'alimentation en liquide de manière centrale à l'intérieur dudit guide d'air (74) et de ladite pointe de pulvérisation (40).

3. Pulvérisateur électrostatique (10) selon la revendication 1, dans lequel ledit orifice de décharge de pointe de pulvérisation est aligné avec ledit tube d'alimentation en liquide (18).

4. Pulvérisateur électrostatique (10) selon la revendication 1, dans lequel la pointe de pulvérisation (72) a une bride radiale externe (72e) supportée contre une lèvre annulaire de diamètre réduit (18a) dudit corps de buse allongé (12) adjacent à une extrémité aval de celui-ci.

5. Pulvérisateur électrostatique selon la revendication 1, dans lequel les fentes transversales (81) définissent une surface d'impact (82) contre laquelle se heurte le liquide chargé électriquement dirigé à travers ledit tube d'alimentation en liquide (18) et celui-ci est dirigé radialement vers l'extérieur à travers lesdites fentes transversales (81) pour une interaction avec le gaz d'atomisation sous pression canalisé par le guide d'air (74).

6. Pulvérisateur électrostatique (10) selon la revendication 1, dans lequel le tube d'alimentation en liquide a une extrémité terminale pointue disposée à l'intérieur de ladite chambre de mélange de pointe de pulvérisation pour diriger un champ électrostatique dans ladite chambre de mélange pour charger davantage les particules de liquide atomisées à l'intérieur de ladite chambre de mélange de pointe de pulvérisation avant leur décharge de l'orifice de décharge de pointe de pulvérisation.

7. Pulvérisateur électrostatique selon la revendication 6, dans lequel l'orifice de décharge de pointe de pulvérisation est aligné axialement avec ladite extrémité terminale pointue du tube d'alimentation en liquide.

8. Pulvérisateur électrostatique (10) selon la revendication 1, dans lequel la chambre de mélange (72) comprend une section aval tronconique qui communique avec ledit orifice de décharge (49).
